# EUROPEAN PATENT APPLICATION

(11) **EP 4 838 248 A1**
(43) Date of publication of application: **11.11.2026**
(21) Application number: 24916434.4
(22) Date of filing: 13.09.2024
(51) Int. Cl.: G01S 5/10

(54) **POSITIONING METHOD, COMMUNICATION DEVICE, AND STORAGE MEDIUM**

(30) Priority: 09.01.2024 CN 202410035850
(71) Applicant: ZTE Corporation, Shenzhen, Guangdong 518057 (CN)
(72) Inventor: BAI, Chen, Shenzhen, Guangdong 518057 (CN); XIA, Shuqiang, Shenzhen, Guangdong 518057 (CN); MA, Yihua, Shenzhen, Guangdong 518057 (CN); WANG, Yuxin, Shenzhen, Guangdong 518057 (CN); WANG, Zhongbin, Shenzhen, Guangdong 518057 (CN); LI, Songqian, Shenzhen, Guangdong 518057 (CN)
(74) Representative: Ziebig Hengelhaupt Intellectual Property Attorneys Patentanwaltskanzlei PartGmbB
(86) International application number: PCT/CN2024/118819
(87) International publication number: WO 2025/148382

(57) **Abstract**

A positioning method, a communication device, and a storage medium. The positioning method comprises: acquiring N pieces of measurement information, the N pieces of measurement information being obtained by M nodes performing sensing detection on a target object, M being less than or equal to 3, and N being greater than or equal to 3; and on the basis of the N pieces of measurement information, determining the position of the target object.

## Description

The present disclosure claims priority to Chinese Patent Application No. 202410035850.9 filed on January 9, 2024, the entire contents of which are incorporated herein by reference.

### TECHNICAL FIELD

The present disclosure relates to the technical field of communications, and in particular, to a positioning method, a communication apparatus, and a storage medium.

### BACKGROUND

Three-point positioning is a common means for sensing and locating a target object in a bistatic mode. A time of arrival (Time of Arrival, TOA for short) positioning method performs positioning based on radio wave propagation time. When the target object has no communication capability and the system has only one type of measurement metric (e.g., delay information), at least four nodes need to be coordinated to participate in positioning, so as to fulfill the target positioning function in the bistatic mode. One base station transmits a sensing signal, and three terminals whose position information is known measure air interface delays, and the coordinate values of the target are solved according to the three-point positioning principle to achieve positioning.

### SUMMARY

In an aspect, a positioning method is provided. The positioning method includes:
acquiring N pieces of measurement information, where the N pieces of measurement information are obtained by M nodes sensing and probing a target object, M is less than or equal to 3, and N is greater than or equal to 3; and
determining a position of the target object based on the N pieces of measurement information.

In another aspect, a communication apparatus is provided. The communication apparatus includes: an acquiring module, and a determination module.

The acquiring module is configured to acquire N pieces of measurement information, where the N pieces of measurement information are obtained by M nodes sensing and probing a target object, M is less than or equal to 3, and N is greater than or equal to 3; and
the determination module is configured to determine a position of the target object based on the N pieces of measurement information.

In yet another aspect, a communication apparatus is provided. The communication apparatus includes: a processor, and a memory configured to store processor-executable instructions; wherein the processor is configured to execute the instructions, so as to enable the communication apparatus to perform the positioning method of any one of the above aspects.

In yet another aspect, a computer-readable storage medium is provided. The computer-readable storage medium has computer program instructions stored thereon, and the computer program instructions, upon being executed by a processor, implement the positioning method of any one of the above aspects.

In yet another aspect, a computer program product is provided. The computer program product includes computer program instructions, and the computer program instructions, upon being executed by a processor, implement the positioning method of any one of the above aspects.

### BRIEF DESCRIPTION OF THE DRAWINGS

To more clearly describe the technical solutions in the present disclosure, the drawings required to be used in some embodiments of the present disclosure will be briefly introduced below. Apparently, the drawings in the following description are only drawings of some embodiments of the present disclosure, and a person of ordinary skill in the art may further obtain other drawings based on these drawings.
FIG. 1 is a schematic architectural diagram of a communication system according to some embodiments of the present disclosure.
FIG. 2 is a schematic flow chart of a positioning method according to some embodiments of the present disclosure.
FIG. 3 is a schematic diagram of multi-node positioning according to some embodiments of the present disclosure.
FIG. 4 is another schematic diagram of multi-node positioning according to some embodiments of the present disclosure.
FIG. 5 is yet another schematic diagram of multi-node positioning according to some embodiments of the present disclosure.
FIG. 6 is yet another schematic diagram of multi-node positioning according to some embodiments of the present disclosure.
FIG. 7 is yet another schematic diagram of multi-node positioning according to some embodiments of the present disclosure.
FIG. 8 is yet another schematic diagram of multi-node positioning according to some embodiments of the present disclosure.
FIG. 9 is yet another schematic diagram of multi-node positioning according to some embodiments of the present disclosure.
FIG. 10 is yet another schematic diagram of multi-node positioning according to some embodiments of the present disclosure.
FIG. 11 is a schematic structural diagram of a communication apparatus according to some embodiments of the present disclosure.
FIG. 12 is a schematic composition diagram of a communication apparatus according to some embodiments of the present disclosure.

### DETAILED DESCRIPTION

To enable a person skilled in the art to better understand the technical solutions of the embodiments of the present disclosure, the technical solutions in the present disclosure will be clearly and completely described below with reference to the drawings in the present disclosure. Obviously, the described embodiments are only a part of the embodiments of the present disclosure, rather than all the embodiments of the present disclosure. Based on the embodiments in the present disclosure, all other embodiments obtained by a person of ordinary skill in the art without making creative efforts fall within the scope of protection of the present disclosure.

It should be noted that, in the present disclosure, wordings such as "exemplarily" or "for example" are used to mean serving as an example, illustration, or explanation. Any embodiment or design described as "exemplarily" or "for example" in the present disclosure should not be interpreted as being more preferred or more advantageous than other embodiments or designs. Specifically, the usage of wordings such as "exemplarily" or "for example" is intended to present related concepts in a specific manner.

Hereinafter, terms such as "first" and "second" are used merely for descriptive purposes and should not be construed as indicating or implying relative importance or implicitly indicating a number of the indicated technical features. Thus, a feature defined with terms such as "first" and "second" may explicitly or implicitly include one or more of such features.

In the description of the present disclosure, unless otherwise specified, "/" means "or", e.g., A/B may represent A or B. "And/or" herein is merely used to describe an association relationship between associated objects and indicates that three relationships may exist, e.g., A and/or B may indicate: only A, only B, and both A and B. Moreover, "at least one" means one or more, and "plurality of/multiple" means two or more.

Existing three-point positioning solutions require at least four nodes to be coordinated to participate in positioning, where one base station transmits a sensing signal, three terminals whose position information is known measure air interface delays, and the coordinate value of the target object is solved according to the three-point positioning principle. Such solution requires coordinating a relatively large number of nodes of the same type to participate in sensing together, resulting in high scheduling difficulty for the nodes and bringing about pressures in terms of commercial deployment difficulty, resource coordination, privacy permission acquisition, construction cost, etc., which limits the usage scenarios of the positioning solution.

Currently, to address the problem that it is difficult to coordinate sensing nodes of the same type, in some techniques, six basic sensing modes (base station transmitting and terminal receiving, terminal transmitting and base station receiving, terminal self-transmitting and self-receiving, base station self-transmitting and self-receiving, terminal-A transmitting and terminal-B receiving, base station-A transmitting and base station-B receiving) are simply combined, which is still a mixture of sensing modes between fixed nodes; the measurement information obtained in such solution can only meet basic positioning requirements, and additional measurement information cannot be obtained to further calibrate the positioning result, possibly resulting in the problem of low positioning accuracy. For the scheduling problem caused by nodes of the same type, solutions need to be considered from two aspects: on the one hand, reducing the total number of nodes deployed in the system, and on the other hand, adjusting the types of receiving nodes. The present disclosure makes full use of the mobility of a terminal to reduce the total number of nodes required in the system for positioning; when a plurality of transmitting nodes exist in the system, delay information from each node to the target object is made measurable through cooperation of different types of transmitting and receiving links. Eventually, only two or three nodes need to be coordinated to achieve the positioning effect of four nodes in the traditional method.

Measures for reducing the total number of nodes deployed in the system include at least one of: (1) hybrid usage of two link modes: A transmitting and receiving and A transmitting and B receiving. One A transmitting and receiving link can replace one A transmitting and B receiving link, thereby saving one node used for sensing. (2) Hybrid usage of fixed nodes (e.g., base stations) and mobile nodes (e.g., terminals). One mobile node participating in sensing in a time-division mode can replace two or more fixed nodes, thereby reducing the total number of deployed nodes in the system.

The main measure for adjusting the types of receiving nodes is: hybrid usage of different types of nodes (e.g., a base station and a terminal). When the number of nodes of a certain type A is relatively large, a node of type B can be used to replace one node of type A, thereby reducing the number of nodes of the same type while keeping the total number of nodes unchanged, so as to facilitate scheduling.

Based on this, the embodiments of the present disclosure provide a positioning method, which, by utilizing the mobility of a terminal, achieves the acquisition of at least three pieces of measurement information obtained by nodes sensing and probing the target object through three or fewer nodes, and then determines the position of the target object based on the three-point positioning principle. Compared with conventional three-point positioning solutions that require at least four nodes to be coordinated, this method, while ensuring the positioning effect, can effectively reduce the number of nodes participating in sensing, thereby reducing the pressures in terms of commercial deployment difficulty, coordination difficulty, difficulty in obtaining privacy permissions, construction cost, etc., and helping to expand the usage scenarios of the positioning method.

In the embodiments of the present disclosure, the network architecture of a communication network (including but not limited to 3G, 4G, 5G, and future mobile communication networks) may include a transmitting end (e.g., including but not limited to a terminal, a base station) and a receiving end (e.g., including but not limited to a terminal, a base station). The role of the transmitting end is to transmit a sensing signal to sense and probe a target object, and the role of the receiving end is to receive an echo signal reflected by the target object of the sensing signal for measurement.

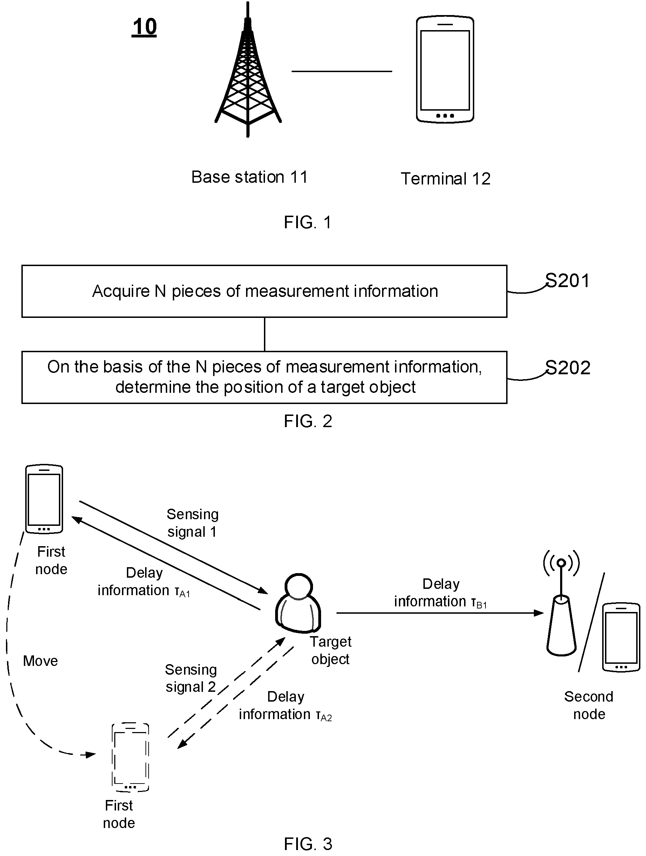

For example, taking a case where the transmitting end of an integrated sensing and communication signal is a base station, FIG. 1 shows a schematic architectural diagram of a communication system provided by the embodiments of the present disclosure. As shown in FIG. 1, a communication system 10 includes a base station 11 and a terminal 12. The base station 11 and the terminal 12 may be communicatively connected.

In some embodiments, the base station 11 is configured to provide wireless access services for a plurality of terminals 12. Specifically, one base station 11 provides one service coverage area (also referred to as a cell). A terminal 12 entering the area may communicate with the base station 11 through a wireless signal, thereby receiving the wireless access service provided by the base station 11. The service coverage areas of the base stations 11 may overlap, and a terminal 12 located in the overlapping area may receive wireless signals from a plurality of base stations 11.

In some embodiments, the base station 11 may be configured to transmit a sensing signal, receive a signal reflected by the target object, and perform sensing processing to obtain sensing information.

In some embodiments, the terminal 12 may also be configured to transmit a sensing signal, receive a signal reflected by the target object, and perform sensing processing to obtain sensing information.

In some embodiments, the base station 11 may be connected to a plurality of terminal 12 devices, for example, the base station 11 is connected to two terminals 12. The two terminals 12 may be located in the same cell, or the two terminals 12 may be located in different cells. That is, one base station 11 may provide network services to terminals 12 in one cell, and may also simultaneously provide network services to terminals 12 in a plurality of cells.

In some embodiments, the base station 11 may be a base station in Long Term Evolution (LTE), Long Term Evolution Advanced (LTEA) or an evolved NodeB (evolutional node B, eNB or eNodeB), a base station in a 5G network, or a base station in a future communication system, etc. The base station may include various types of network-side devices such as macro base stations, micro base stations, home base stations, remote radio heads, reconfigurable intelligent surfaces (RISs), routers, wireless fidelity (WIFI) devices, or primary cells and secondary cells.

In some embodiments, the terminal 12 may be a device with a wireless transceiving function, which may be deployed on land, including indoor or outdoor, handheld, wearable or vehicle-mounted; may also be deployed on water surfaces (e.g., ships, etc.); and may also be deployed in the air (e.g., aircraft, balloons, satellites, etc.). The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc., and the embodiments of the present disclosure do not limit the application scenarios. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent or a UE apparatus, etc., which is not limited in the embodiments of the present disclosure.

It should be understood that FIG. 1 is an exemplary structural diagram, and the total number of devices included in the communication system shown in FIG. 1 in the embodiments of the present disclosure should be less than or equal to 3, e.g., 3 terminals, 1 terminal and 2 base stations, etc. Moreover, in addition to the devices shown in FIG. 1, the communication system shown in FIG. 1 may further include other devices, which is not limited herein.

FIG. 2 is a schematic flow chart of a positioning method provided by the embodiments of the present disclosure. For example, the positioning method provided by the present disclosure may be applied in the network architecture shown in FIG. 1, and further may be applied in a positioning apparatus, which may be any node in FIG. 1, or a sensing server (not shown in FIG. 1) connected to the base station and the terminal.

As shown in FIG. 2, the positioning method provided by the present disclosure may include S201 and S202.

In S201: N pieces of measurement information are acquired.

The N pieces of measurement information are obtained by M nodes sensing and probing a target object. M is less than or equal to 3, and N is greater than or equal to 3.

In some embodiments, the M nodes may perform sensing measurement on the target object to obtain respective pieces of measurement information. Further, the positioning apparatus may acquire at least three pieces of measurement information from the M nodes, so as to subsequently determine the position of the target object based on the measurement information.

The mode in which the positioning apparatus acquires the measurement information from the M nodes may be an active request mode (the positioning apparatus receives the measurement information after sending a request to the M nodes) or a passive receiving mode (the M nodes actively report the measurement information).

In some embodiments, each of the N pieces of measurement information includes: delay information measured by a node on an echo signal reflected by the target object, and position information of the node upon performing measurement. For example, node 1 performs sensing probing at position 1 to obtain delay information 1, then node 1 reports a coordinate of position 1 and delay information 1 as measurement information to the positioning apparatus.

In S202: the position of the target object is determined based on the N pieces of measurement information.

In some embodiments, after acquiring the N pieces of measurement information, the positioning apparatus may calculate the coordinate value of the target object according to pieces of delay information in respective pieces of measurement information and measurement positions corresponding to the pieces of delay information, thereby achieving positioning of the target object.

For example, the positioning apparatus may determine the absolute address (e.g., longitude and latitude coordinates, etc.) of the target object by using a multi-round-trip-time (multi-RTT) algorithm, and details of the algorithm may be referred to in descriptions in some techniques and will not be elaborated herein. In addition, the position of the target object may also be determined by other three-point positioning methods, which is not limited in the embodiments of the present disclosure.

Hereinafter, solutions for achieving positioning with different numbers of nodes will be described in detail in combination with some scenarios and the drawings of the specification.

### Scenario 1:

The M nodes include a first node and a second node, and the N pieces of measurement information at least include first measurement information, second measurement information, and third measurement information.

The first measurement information is information obtained by the first node measuring an echo signal of a first sensing signal at a first position.

The second measurement information is information obtained by the first node measuring an echo signal of a second sensing signal at a second position.

The third measurement information is information obtained by the second node measuring an echo signal of the first sensing signal or an echo signal of the second sensing signal at a third position.

It can be seen that in this scenario 1, two nodes and two sensing signals are used to acquire three pieces of measurement information to achieve positioning. The first node needs to move between the first position and the second position, so the first node may be a terminal. The position of the second node remains unchanged, so either a terminal or a base station may serve as the second node.

In addition, according to different sources of the sensing signals, the following several implementations can be categorized:

### Implementation 1

The first sensing signal is a sensing signal transmitted from the first node at the first position, and the second sensing signal is a sensing signal transmitted from the first node at the second position.

For example, taking a case where the second node measures the echo signal of the first sensing signal, description is made in conjunction with FIG. 3.
(1) At time t1, the first node is at the first position, and transmits sensing signal 1, the first node receives the echo signal of the sensing signal 1 reflected by the target object, calculates and records one-way delay information *τ*_{*A*1} (corresponding to the first measurement information).
(2) The second node remains unchanged at the third position all the time. The sensing signal 1 generates an echo signal in the direction of the second node, and the full-link delay information perceived by the second node is *τ*_{*A*1} + *τ*_{*B*1} (corresponding to the third measurement information).
(3) At time t2, the first node is at the second position, and transmits sensing signal 2, the first node receives the echo signal of the sensing signal 2 reflected by the target object, calculates and records one-way delay information *τ*_{*A*2} (corresponding to the second measurement information).
(4) The first node reports the coordinate of the first position, the coordinate of the second position, the delay information *τ*_{*A*1}, *τ*_{*A*2} to the positioning apparatus, and the second node reports the coordinate of the third position and the delay information *τ*_{*A*1} + *τ*_{*B*1} to the positioning apparatus.
(5) The positioning apparatus calculates the position of the target object through 3 pieces of delay information and 3 position coordinates.
(6) If necessary, the second node may also additionally receive echo information of the sensing signal 2, and report the measured additional delay information to the positioning apparatus, which may be used for calibration of the measurement result, thereby improving the robustness of the positioning method.

### Implementation 2

The first sensing signal is a sensing signal transmitted from the second node at the third position, and the second sensing signal is a signal transmitted from the second node at the third position.

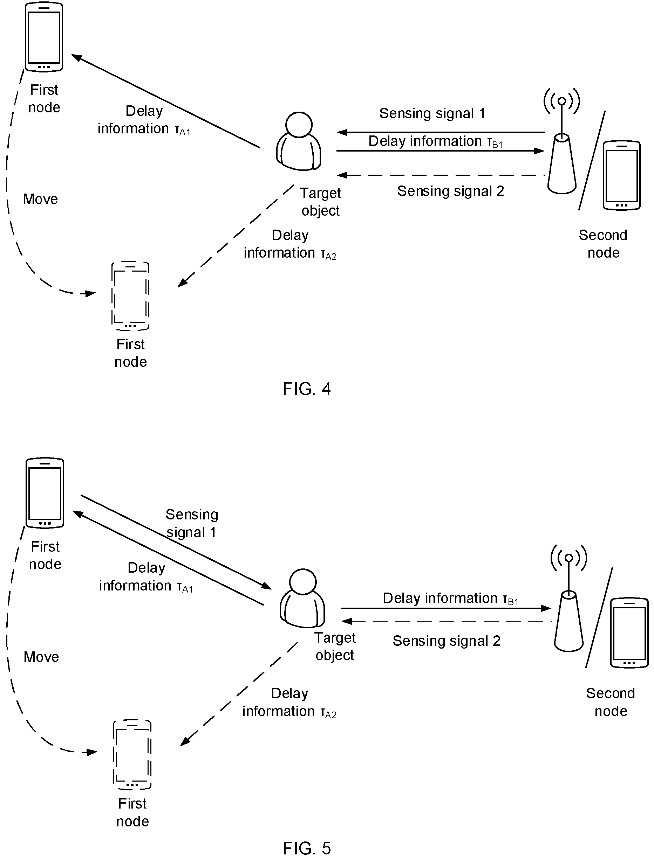

For example, description is made in conjunction with FIG. 4.
(1) At time t1, the second node transmits sensing signal 1, the second node receives the echo signal of the sensing signal 1 reflected by the target object, calculates and records one-way delay information *τ*_{*B*1}.
(2) Meanwhile, the first node at the first position receives the echo signal of the sensing signal 1 reflected by the target object and records full-link delay information *τ*_{*A*1} + *τ*_{*B*1}.
(3) At time t2, the second node transmits sensing signal 2, and the first node which has moved to the second position receives the echo signal of the sensing signal 2 reflected by the target object and records full-link delay information *τ*_{*A*2} + *τ*_{*B*1}.
(4) The second node reports its own coordinate and the delay information *τ*_{*B*1} to the positioning apparatus, and the first node reports the coordinate of the first position, the coordinate of the second position, the delay information *τ*_{*A*1} + *τ*_{*B*1} and *τ*_{*A*2} + *τ*_{*B*1} to the positioning apparatus.
(5) The positioning apparatus obtains the position of the target object by solving the delay information and position coordinates of nodes.
(6) If necessary, the second node may also additionally receive the echo signal of the sensing signal 2, and report the additional delay information to the positioning apparatus for calibration of the measurement result.

### Implementation 3

The first sensing signal is a sensing signal transmitted from the first node at the first position, and the second sensing signal is a sensing signal transmitted from the second node at the third position.

Taking a case where the second node measures the echo signal of the first sensing signal, description is made in conjunction with FIG. 5.
(1) At time t1, the first node is at the first position, transmits sensing signal 1, the first node receives the echo signal of the sensing signal 1 reflected by the target object, calculates and records one-way delay information *τ*_{*A*1}.
(2) The second node remains unchanged at the third position all the time, the sensing signal 1 generates an echo signal in the direction of the second node, and the full-link delay information sensed by the second node is *τ*_{*A*1} + *τ*_{*B*1}.
(3) At time t2, the first node moves to the second position, the second node transmits sensing signal 2, and the first node receives the echo of the sensing signal 2 and records delay information *τ*_{*A*2} + *τ*_{*B*1}.
(4) The first node reports the coordinate of the first position, the coordinate of the second position, the delay information *τ*_{*A*1} and *τ*_{*A*2} + *τ*_{*B*1} to the positioning apparatus. The second node reports the coordinate of position 3 and the delay information *τ*_{*A*1}+ *τ*_{*B*1} to the positioning apparatus.
(5) The positioning apparatus obtains the position of the target object by solving the delay information and position coordinates of nodes.
(6) If necessary, the second node may also additionally receive the echo signal of the sensing signal 2, and report the additional delay information to the positioning apparatus, which may be used for calibration of the measurement result.

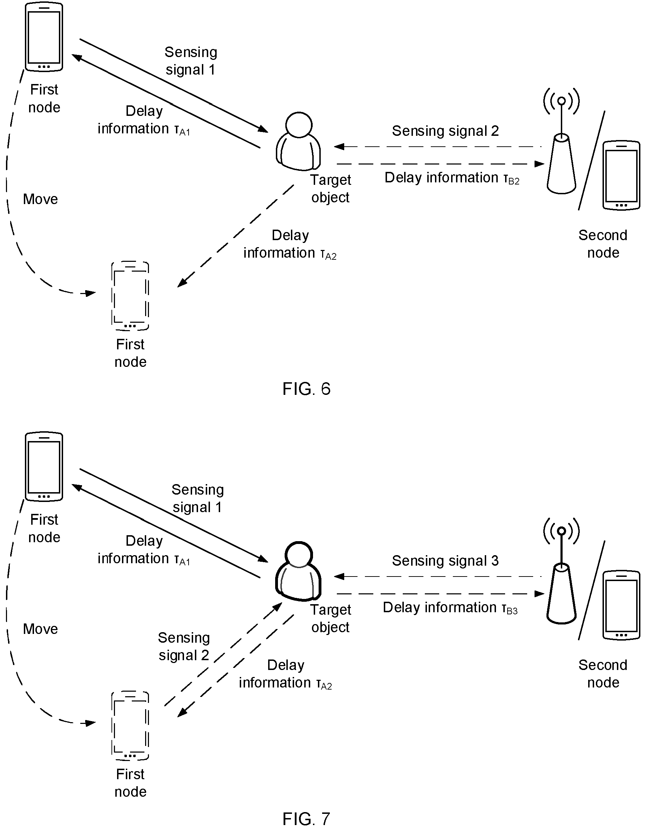

Taking a case where the second node measures the echo signal of the second sensing signal, description is made in conjunction with FIG. 6.
(1) At time t1, the first node is at the first position, and transmits sensing signal 1, the first node receives the echo signal of the sensing signal 1 reflected by the target object, calculates and records one-way delay information *τ*_{*A*1}.
(2) At time t2, the first node moves to the second position, the second node remains unchanged at the third position all the time, at this time the second node transmits sensing signal 2 and receives the echo signal of the sensing signal 2, calculates and records one-way delay information *τ*_{*B*2},
(3) the first node at the second position receives the echo of the sensing signal 2 and records full-link delay information *τ*_{*A*2} + *τ*_{*B*2};
(4) The first node reports the coordinate of the first position, the coordinate of the second position, the delay information *τ*_{*A*1} and *τ*_{*A*2} + *τ*_{*B*2} to the positioning apparatus, and the second node reports the coordinate of the third position and the delay information *τ*_{*B*2} to the positioning apparatus.
(5) The positioning apparatus obtains the position of the target object by solving the delay information and position coordinates of nodes.
(6) If necessary, the second node may also additionally receive the echo signal of the sensing signal 1, and report the additional delay information to the positioning apparatus, which may be used for calibration of the measurement result.

### Scenario 2:

The M nodes include a first node and a second node, and the N pieces of measurement information at least include first measurement information, second measurement information, and third measurement information.

The first measurement information is information obtained by the first node measuring the echo signal of a first sensing signal at a first position, where the first sensing signal is a sensing signal transmitted from the first node at the first position.

The second measurement information is information obtained by the first node measuring the echo signal of a second sensing signal at a second position, where the second sensing signal is a sensing signal transmitted from the first node at the second position.

The third measurement information is information obtained by the second node measuring a third sensing signal at a third position; where the third sensing signal is a sensing signal transmitted from the second node at the third position.

It can be seen that in this scenario 2, two nodes and three sensing signals are used to acquire three pieces of measurement information to achieve positioning. The first node needs to move between the first position and the second position, so the first node may be a terminal. The position of the second node remains unchanged, so either a terminal or a base station may serve as the second node.

For example, description is made in conjunction with FIG. 7.
(1) At time t1, the first node is at the first position, and transmits sensing signal 1, the first node receives the echo signal of the sensing signal 1 reflected by the target object, calculates and records one-way delay information *τ*_{*A*1}.
(2) At time t2, the first node moves to the second position, and transmits sensing signal 2, the first node receives the echo signal of the sensing signal 2 reflected by the target object, calculates and records one-way delay information *τ*_{*A*2}.
(3) The second node remains unchanged at the third position all the time, and transmits sensing signal 3 at time t3, the second node receives the echo signal of the sensing signal 3 reflected by the target object, calculates and records one-way delay information *τ*_{*B*3}.
(4) The first node reports the coordinate of the first position, the coordinate of the second position, the delay information *τ*_{*A*1} and *τ*_{*A*2} to the positioning apparatus, and the second node reports the coordinate of the third position and the delay information *τ*_{*B*3} to the positioning apparatus.
(5) The positioning apparatus obtains the position of the target object by solving the delay information and the node position coordinates.
(6) If necessary, the first node may also additionally receive the echo signal of the sensing signal 3, and the second node may also additionally receive the echo signals of the sensing signal 1 and the sensing signal 2, and report the above additional delay information to the positioning apparatus, which may be used for calibration of the measurement result.

### Scenario 3:

The M nodes include a first node, a second node and a third node, and the N pieces of measurement information at least include first measurement information, second measurement information, third measurement information, and fourth measurement information.

The first measurement information is information obtained by the first node measuring an echo signal of a first sensing signal at a first position.

The second measurement information is information obtained by the first node measuring an echo signal of a second sensing signal at a second position.

The third measurement information is information obtained by the second node measuring an echo signal of the first sensing signal or an echo signal of the second sensing signal at a third position.

The fourth measurement information is information obtained by the third node measuring an echo signal of the first sensing signal or an echo signal of the second sensing signal at a fourth position.

It can be seen that in this scenario 3, three nodes and two sensing signals are used to acquire four pieces of measurement information to achieve positioning. The first node needs to move between the first position and the second position, so the first node may be a terminal. The positions of the second node and the third node remain unchanged, so either terminals or base stations may serve as the second node and the third node.

In addition, according to different sources of the sensing signals, the following several implementation modes can be categorized:

### Implementation 1

The first sensing signal is a sensing signal transmitted from the first node at the first position, and the second sensing signal is a sensing signal transmitted from the first node at the second position.

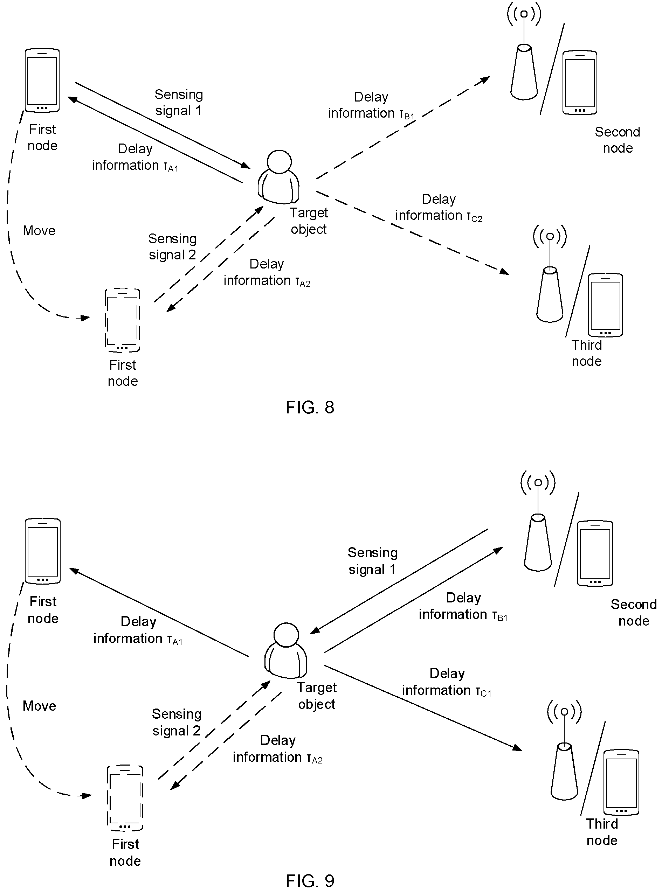

For example, taking a case where the second node measures the echo signal of the first sensing signal and the third node measures the echo signal of the second sensing signal, description is made in conjunction with FIG. 8.
(1) At time t1, the first node transmits sensing signal 1, the first node receives the echo signal of the sensing signal 1 reflected by the target object, calculates and records one-way delay information *τ*_{*A*1}.
(2) Meanwhile, the second node receives the echo signal of the sensing signal 1 reflected by the target object and records full-link delay information *τ*_{*A*1} + *τ*_{*B*1}.
(3) At time t2, the first node which has moved to the second position transmits sensing signal 2, the first node receives the echo signal of the sensing signal 2 reflected by the target object, calculates and records one-way delay information *τ*_{*A*2}.
(4) Meanwhile, the third node receives the echo of the sensing signal 2 reflected by the target object and records full-link delay information *τ*_{*A*2}+ *τ*_{*C*2}.
(5) The first node reports the coordinates of the first position and the second position and the delay information *τ*_{*A*1} and *τ*_{*A*2} to the positioning apparatus, the second node reports the coordinate of the third position and the delay information *τ*_{*A*1} + *τ*_{*B*1} to the positioning apparatus, and the third node reports the coordinate of the fourth position and the delay information *τ*_{*A*2} + *τ*_{*C*2} to the positioning apparatus.
(6) The positioning apparatus selects two sets of information of A transmitting and B-receiving and one set of information of A transmitting and receiving to solve equations, and the position of the target object can be obtained. The unselected set of information may be used for calibration of the measurement result.
(7) In addition, the positioning apparatus may also selectively receive measurement information other than the above paths, e.g., the third node receives the echo signal of the sensing signal 1, and the second node receives the echo signal of the sensing signal 2. The acquired additional delay information is also reported to the positioning apparatus, which may be used for further calibration of the measurement result.

### Implementation 2

The first sensing signal is a sensing signal transmitted from the first node at the first position, and the second sensing signal is a sensing signal transmitted from the second node at the third position, or a sensing signal transmitted from the third node at the fourth position.

For example, taking a case where the second node transmits the sensing signal at the third position, description is made in conjunction with FIG. 9.
(1) At time t1, the second node transmits sensing signal 1, the second node itself receives the echo signal of the sensing signal 1 reflected by the target object, calculates and records one-way delay information *τ*_{*B*1}.
(2) Meanwhile, the first node at the first position receives the echo signal of the sensing signal 1 reflected by the target object and records full-link delay information *τ*_{*A*1} + *τ*_{*B*1}. The third node at the fourth position receives the echo signal of the sensing signal 1 reflected by the target object and records full-link delay information *τ*_{*B*1} + *τ*_{*C*1}.
(3) At time t2, the first node which has moved to the second position transmits sensing signal 2, the first node itself receives the echo signal of the sensing signal 2 reflected by the target object, calculates and records one-way delay information *τ*_{*A*2}.
(4) The second node reports the coordinate of the third position and the delay information *τ*_{*B*1} to the positioning apparatus. The third node reports the coordinates of the fourth position and the delay information *τ*_{*B*1} + *τ*_{*C*1} to the positioning apparatus. The first node reports the coordinates of the first position and the second position and the delay information *τ*_{*A*1} + *τ*_{*B*1} and *τ*_{*A*2} to the positioning apparatus.
(5) The positioning apparatus selects two sets of information of A transmitting- and B receiving and one set of information of A transmitting and receiving as a main combination to solve equations, and the position of the target object can be obtained. The unselected set of information may be used for calibration of the measurement result.
(6) In addition, the positioning apparatus may also selectively receive measurement signals other than the above paths, e.g., the third node receives the echo signal of the sensing signal 2, and the second node receives the echo signal of the sensing signal 2. The acquired additional delay information is also reported to the positioning apparatus, which may be used for further calibration of the measurement result.

### Implementation 3

The first sensing signal is a sensing signal transmitted from the second node at the third position, and the second sensing signal is a sensing signal transmitted from the third node at the fourth position.

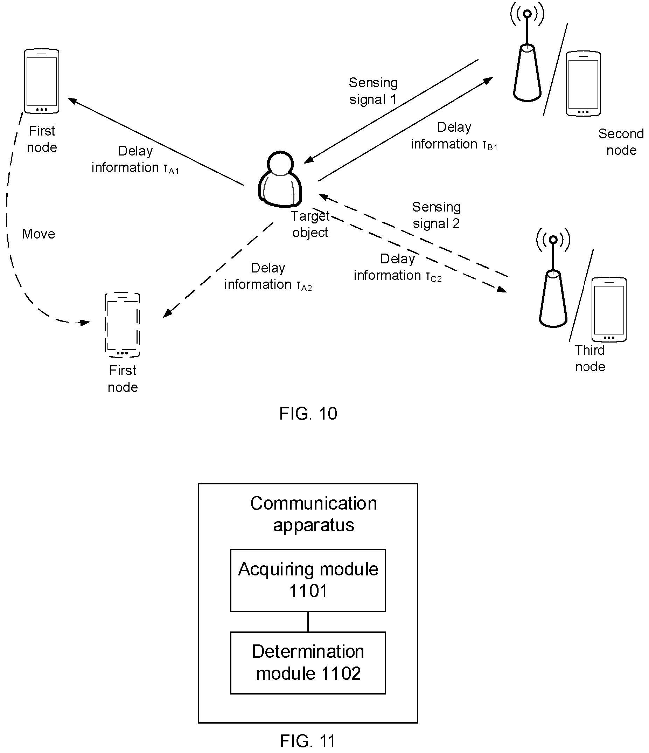

For example, description is made in conjunction with FIG. 10.
(1) At time t1, the second node transmits sensing signal 1, the second node receives the echo signal of the sensing signal 1 reflected by the target object, calculates and records one-way delay information *τ*_{*B*1}.
(2) Meanwhile, the first node at the first position receives the echo of the sensing signal 1 reflected by the target object and records delay information *τ*_{*A*1} + *τ*_{*B*1}.
(3) At time t2, the third node at the fourth position transmits sensing signal 2, the third node receives the echo signal of the sensing signal 2 reflected by the target object, calculates and records one-way delay information *τ*_{*C*2}.
(4) The first node which has moved to the second position receives the echo of the sensing signal 2 reflected by the target object and records delay information *τ*_{*A*2} + *τ*_{*C*2}.
(5) The second node reports the coordinate of the third position and the delay information *τ*_{*B*1} to the positioning apparatus, the third node reports the coordinate of the fourth position and the delay information *τ*_{*C*2} to the positioning apparatus, and the first node reports the coordinates of the first position and the second position and the delay information *τ*_{*A*1} + *τ*_{*B*1} and *τ*_{*A*2} + *τ*_{*C*2} to the positioning apparatus.
(6) The positioning apparatus selects two sets of information of A transmitting and B receiving and one set of information of A transmitting and receiving as a main combination to solve equations, and the position of the target object can be obtained. The unselected set of information may be used for calibration of the measurement result.
(7) In addition, measurement information other than the above paths may also be selectively received, e.g., the third node receives the echo signal of the sensing signal 1, and the second node receives the echo signal of the sensing signal 2. The acquired additional delay information is also reported to the positioning apparatus, which may be used for further calibration of the measurement result.

The positioning method provided by the embodiments of the present disclosure can acquire at least three pieces of measurement information acquired by nodes sensing and probing the target object through three or fewer nodes, and then determine the position of the target object based on the three-point positioning principle. Compared with conventional three-point positioning solutions that require at least four nodes to be coordinated, this method, while ensuring the positioning effect, can effectively reduce the number of nodes participating in sensing, thereby reducing the pressure in terms of commercial deployment difficulty, coordination difficulty, difficulty in obtaining privacy permissions, construction cost, etc.

Further, based on the mobility of a terminal, the embodiments of the present disclosure achieve the usage of fewer nodes to obtain more measurement information. Herein, apart from the measurement information necessary for positioning, other additional measurement information may also be used for calibration of the positioning result, thereby further improving the robustness of the positioning method.

It can be understood that, in order to implement the above functions, a communication apparatus (which may be the above positioning apparatus) includes corresponding hardware structures and/or software modules for executing the various functions. A person skilled in the art should readily appreciate that, in combination with the algorithm steps described in the examples of the embodiments of the present disclosure, the present disclosure can be implemented in the form of hardware or a combination of hardware and computer software. Whether a function is performed in the form of hardware or computer software driving hardware depends on the specific application and design constraints of the technical solution. A skilled person may use different methods to implement the described functions for each specific application, but such implementation should not be considered to go beyond the scope of the present disclosure.

The embodiments of the present disclosure may divide functional modules of the communication apparatus according to the above method embodiments. For example, each function may be divided corresponding to a respective functional module, or two or more functions may be integrated into one functional module. The above integrated module may be implemented either in the form of hardware or in the form of software. It should be noted that the division of modules in the embodiments of the present disclosure is schematic and is only a logical function division. There may be other division modes in actual implementation. The following description is made by taking the example where each function is divided corresponding to a respective functional module.

FIG. 11 is a schematic structural diagram of a communication apparatus provided by the embodiments of the present disclosure. The communication apparatus can perform the positioning methods provided by the above method embodiments. As shown in FIG. 11, the communication apparatus includes an acquiring module 1101 and a determination module 1102.

The acquiring module 1101 is configured to acquire N pieces of measurement information, where the N pieces of measurement information are obtained by M nodes sensing and probing a target object, M is less than or equal to 3, and N is greater than or equal to 3.

The determination module 1102 is configured to determine a position of the target object based on the N pieces of measurement information.

In some embodiments, each of the N pieces of measurement information includes: delay information measured by a node on an echo signal reflected by the target object, and position information of the node upon performing measurement.

In some embodiments, the M nodes include a first node and a second node; the N pieces of measurement information at least include first measurement information, second measurement information, and third measurement information; the first measurement information is information obtained by the first node measuring an echo signal of a first sensing signal at a first position; the second measurement information is information obtained by the first node measuring an echo signal of a second sensing signal at a second position; the third measurement information is information obtained by the second node measuring an echo signal of the first sensing signal or an echo signal of the second sensing signal at a third position.

In some embodiments, the first sensing signal is a sensing signal transmitted from the first node at the first position; the second sensing signal is a sensing signal transmitted from the first node at the second position.

In some embodiments, the first sensing signal is a sensing signal transmitted from the second node at the third position; the second sensing signal is a signal transmitted from the second node at the third position.

In some embodiments, the first sensing signal is a sensing signal transmitted from the first node at the first position; the second sensing signal is a sensing signal transmitted from the second node at the third position.

In some embodiments, the M nodes include a first node and a second node; the N pieces of measurement information at least include first measurement information, second measurement information, and third measurement information; the first measurement information is information obtained by the first node measuring an echo signal of a first sensing signal at a first position; the first sensing signal is a sensing signal transmitted from the first node at the first position; the second measurement information is information obtained by the first node measuring an echo signal of a second sensing signal at a second position; the second sensing signal is a sensing signal transmitted from the first node at the second position; the third measurement information is information obtained by the second node measuring a third sensing signal at a third position; the third sensing signal is a sensing signal transmitted from the second node at the third position.

In some embodiments, the M nodes include a first node, a second node and a third node; the N pieces of measurement information at least include first measurement information, second measurement information, third measurement information, and fourth measurement information; the first measurement information is information obtained by the first node measuring an echo signal of a first sensing signal at a first position; the second measurement information is information obtained by the first node measuring an echo signal of a second sensing signal at a second position; the third measurement information is information obtained by the second node measuring an echo signal of the first sensing signal or an echo signal of the second sensing signal at a third position; the fourth measurement information is information obtained by the third node measuring an echo signal of the first sensing signal or an echo signal of the second sensing signal at a fourth position.

In some embodiments, the first sensing signal is a sensing signal transmitted from the first node at the first position; the second sensing signal is a sensing signal transmitted from the first node at the second position.

In some embodiments, the first sensing signal is a sensing signal transmitted from the first node at the first position; the second sensing signal is a sensing signal transmitted from the second node at the third position, or a sensing signal transmitted from the third node at the fourth position.

In some embodiments, the first sensing signal is a sensing signal transmitted from the second node at the third position; the second sensing signal is a sensing signal transmitted from the third node at the fourth position.

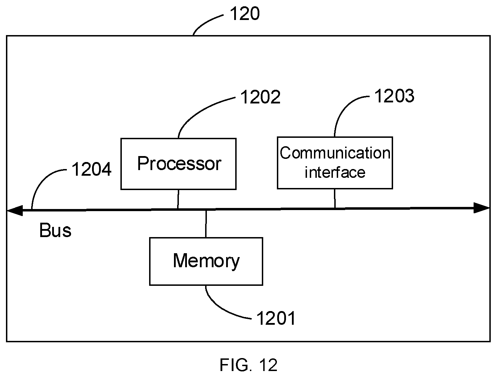

In the case where the functions of the above integrated modules are implemented in the form of hardware, the embodiments of the present disclosure provide another structure of the communication apparatus involved in the above embodiments. As shown in FIG. 12, the communication apparatus 120 includes: a memory 1201, a processor 1202, a communication interface 1203, and a bus 1204.

The memory 1201 may be a read-only memory (ROM) or other types of static storage devices that can store static information and instructions, a random access memory (RAM) or other types of dynamic storage devices that can store dynamic information and instructions, or an electrically erasable programmable read-only memory (EEPROM), a magnetic disk storage medium or other magnetic storage devices, or any other medium that can be used to carry or store desired program codes in the form of instructions or data structures and that can be accessed by a computer, but is not limited thereto.

The processor 1202 may be a device that implements or executes various exemplary logical blocks, modules, and circuits described in conjunction with the embodiments of the present disclosure. The processor 1202 may be a central processing unit, a general-purpose processor, a digital signal processor, an application-specific integrated circuit, a field-programmable gate array or other programmable logic devices, a transistor logic device, a hardware component, or any combination thereof. The processor 1202 may implement or execute various exemplary logical blocks, modules, and circuits described in conjunction with the embodiments of the present disclosure. The processor 1202 may also be a combination that implements computing functions, e.g., a combination including one or more microprocessors, a combination of a DSP and a microprocessor, etc.

The communication interface 1203 is configured to connect with other devices through a communication network. The communication network may be Ethernet, a radio access network, a wireless local area network (WLAN), etc.

In some embodiments, the memory 1201 may exist independently of the processor 1202, and the memory 1201 may be connected to the processor 1202 through the bus 1204, for storing instructions or program codes. When the processor 1202 calls and executes the instructions or program codes stored in the memory 1201, the positioning method provided by the embodiments of the present disclosure can be implemented.

In some embodiments, the memory 1201 may also be integrated with the processor 1202.

The bus 1204 may be an extended industry standard architecture (EISA) bus, etc. The bus 1204 may be divided into an address bus, a data bus, a control bus, etc. For ease of representation, only one thick line is used in FIG. 12 to represent the bus 1204, but does not mean that there is only one bus or one type of bus.

In some embodiments, executable instructions are stored in the memory 1201, and when the processor 1202 executes the executable instructions, the communication apparatus is enabled to perform the positioning method as described in any one of the above embodiments.

Some embodiments of the present disclosure provide a computer-readable storage medium (e.g., a non-transitory computer-readable storage medium), the computer-readable storage medium has computer program instructions stored therein, and when the computer program instructions are run on a computer, the computer is enabled to perform the positioning method as described in any one of the above embodiments.

For example, the above computer-readable storage medium may include, but is not limited to: magnetic storage devices (e.g., hard disks, floppy disks or magnetic tapes, etc.), optical disks (e.g., Compact Disk (CD), Digital Versatile Disk (DVD), etc.), smart cards and flash memory devices (e.g., Erasable Programmable Read-Only Memory (EPROM), cards, sticks or key drivers, etc.). The various computer-readable storage media described in the present disclosure may represent one or more devices and/or other machine-readable storage media for storing information. The term "machine-readable storage medium" may include, but is not limited to, wireless channels and various other media capable of storing, containing and/or carrying instructions and/or data.

The embodiments of the present disclosure provide a computer program product containing instructions, and when the computer program product is run on a computer, the computer is enabled to perform the positioning method as described in any one of the above embodiments.

The above description is only specific implementations of the present disclosure, but the scope of protection of the present disclosure is not limited thereto. Any variation or substitution within the technical scope disclosed in the present disclosure shall be covered by the scope of protection of the present disclosure. Therefore, the scope of protection of the present disclosure shall be subject to the scope of protection of the claims.

## Claims

1. A positioning method, **characterized in that** the method comprises:
acquiring N pieces of measurement information; wherein the N pieces of measurement information are obtained by M nodes sensing and probing a target object; M is less than or equal to 3; N is greater than or equal to 3; and
determining a position of the target object based on the N pieces of measurement information.

2. The method according to claim 1, wherein each measurement information of the N pieces of measurement information comprises: delay information measured by a node on an echo signal reflected by the target object, and position information of the node upon performing measurement.

3. The method according to claim 1, wherein the M nodes comprise a first node and a second node; the N pieces of measurement information at least comprise first measurement information, second measurement information, and third measurement information;
the first measurement information is information obtained by the first node measuring an echo signal of a first sensing signal at a first position;
the second measurement information is information obtained by the first node measuring an echo signal of a second sensing signal at a second position;
the third measurement information is information obtained by the second node measuring an echo signal of the first sensing signal or an echo signal of the second sensing signal at a third position.

4. The method according to claim 3, wherein the first sensing signal is a sensing signal transmitted from the first node at the first position; the second sensing signal is a sensing signal transmitted from the first node at the second position.

5. The method according to claim 3, wherein the first sensing signal is a sensing signal transmitted from the second node at the third position; the second sensing signal is a signal transmitted from the second node at the third position.

6. The method according to claim 3, wherein the first sensing signal is a sensing signal transmitted from the first node at the first position; the second sensing signal is a sensing signal transmitted from the second node at the third position.

7. The method according to claim 1, wherein the M nodes comprise a first node and a second node; the N pieces of measurement information at least comprise first measurement information, second measurement information, and third measurement information;
the first measurement information is information obtained by the first node measuring an echo signal of a first sensing signal at a first position; the first sensing signal is a sensing signal transmitted from the first node at the first position;
the second measurement information is information obtained by the first node measuring an echo signal of a second sensing signal at a second position; the second sensing signal is a sensing signal transmitted from the first node at the second position;
the third measurement information is information obtained by the second node measuring a third sensing signal at a third position; the third sensing signal is a sensing signal transmitted from the second node at the third position.

8. The method according to claim 1, wherein the M nodes comprise a first node, a second node and a third node; the N pieces of measurement information at least comprise first measurement information, second measurement information, third measurement information, and fourth measurement information;
the first measurement information is information obtained by the first node measuring an echo signal of a first sensing signal at a first position;
the second measurement information is information obtained by the first node measuring an echo signal of a second sensing signal at a second position;
the third measurement information is information obtained by the second node measuring the echo signal of the first sensing signal or the echo signal of the second sensing signal at a third position;
the fourth measurement information is information obtained by the third node measuring the echo signal of the first sensing signal or the echo signal of the second sensing signal at a fourth position.

9. The method according to claim 8, wherein the first sensing signal is a sensing signal transmitted from the first node at the first position; the second sensing signal is a sensing signal transmitted from the first node at the second position.

10. The method according to claim 8, wherein the first sensing signal is a sensing signal transmitted from the first node at the first position; the second sensing signal is a sensing signal transmitted from the second node at the third position, or a sensing signal transmitted from the third node at the fourth position.

11. The method according to claim 8, wherein the first sensing signal is a sensing signal transmitted from the second node at the third position; the second sensing signal is a sensing signal transmitted from the third node at the fourth position.

12. A communication apparatus, **characterized by** comprising: a processor, and a memory configured to store processor-executable instructions;
wherein the processor is configured to execute the instructions, so as to enable the communication apparatus to perform the positioning method according to any one of claims 1-11.

13. A computer-readable storage medium, **characterized in that** the computer-readable storage medium stores computer instructions, so as to enable a communication apparatus to perform the positioning method according to any one of claims 1-11.
